# EUROPEAN PATENT APPLICATION

(11) **EP 3 330 129 A1**
(43) Date of publication of application: **06.06.2018**
(21) Application number: 17171231.8
(22) Date of filing: 16.05.2017
(51) Int. Cl.: B60Q 1/50, B60Q 1/52, B60Q 7/00, B60Q 9/00

(54) **INFORMATION NOTIFICATION DEVICE FOR VEHICLE**

(30) Priority: 02.12.2016 KR 20160007028 U
(71) Applicant: Jo, Kwang Hyun, Daegu 41464 (KR)
(72) Inventor: Jo, Kwang Hyun, Daegu 41464 (KR)
(74) Representative: Zardi, Marco

(57) **Abstract**

Disclosed herein is an information notification device for a vehicle. The information notification device for a vehicle is a vehicle-mounted safety product, and enables shapes and characters or the like, adapted to indicate a direction, to be displayed in various manners by opening the trunk of a vehicle when a breakdown or accident of the vehicle has occurred, and thus the driver of the following vehicle can be rapidly and accurately notified of the emergency situation and a traffic lane to and along which the following vehicle needs to switch its lane and to travel can be indicated by a directional sign, thereby enabling the driver of the following vehicle to more safely and rapidly deal with the emergency situation.

## Description

### BACKGROUND

### 1. Technical Field

The present invention relates generally to an information notification device for a vehicle, and more particularly to an information notification device for a vehicle that enables shapes and characters or the like, adapted to indicate a direction, to be displayed in various manners by opening the trunk of a vehicle when a breakdown or accident of the vehicle has occurred, and thus the driver of the following vehicle can be rapidly and accurately notified of the emergency situation and a traffic lane to and along which the following vehicle needs to switch its lane and to travel can be indicated by a directional sign, thereby enabling the driver of the following vehicle to more safely and rapidly deal with the emergency situation.

### 2. Description of the Related Art

Generally, when a vehicle cannot normally run due to a breakdown or accident while traveling on a road, the driver of the vehicle must notify the driver of the following vehicle of the situation by setting up an emergency triangle behind the vehicle, thereby preventing another secondary accident from occurring. Currently, it is prescribed in many countries that vehicles must carry such emergency triangles.

A conventional emergency triangle is generally set up at a location 150 to 200 m away from the back of a vehicle. This is cumbersome and inconvenient. Furthermore, when it is difficult to secure a clear view due to a situation, such as night, rain, fog, or the like, a user may undergo a collision with the following vehicle while moving to set up the emergency triangle. That is to say, a problem in which a user is exposed to a risk when setting up the emergency triangle has been continuously raised.

Furthermore, the conventional emergency triangle can be identified by the driver of the following vehicle only through the reflection of light from reflective paper attached onto the emergency triangle. However, a problem in which the display capability of the conventional emergency triangle is considerably degraded at night or in the event of rain has been also raised.

In order to overcome the above-described problems, Korean Patent Application Publication No. 10-2006-0005802 discloses a "flickering emergency triangle structure fixedly mounted on the trunk rid of a vehicle." In this structure, an emergency triangle is fixedly mounted on the trunk rid of a vehicle, and a lamp included in the emergency triangle is synchronized with an emergency lamp included in a rear combination lamp disposed in the vehicle and emits light by using power supplied from the battery of the vehicle.

However, this disclosed emergency triangle simply provides notification of an emergency situation via the flickering lamp of the emergency triangle, but does not provide any guidance on a traffic lane to and along which the following vehicle needs to switch its lane and to travel. Accordingly, this emergency triangle has its limitation on the driver of the following vehicle more safely and rapidly dealing with an emergency situation.

Furthermore, Korean Utility Model Registration No. 20-0167063 discloses a "safety sign balloon." This safety sign balloon is formed in a triangular pyramid shape, the safety sign balloon is inflated by injecting gas thereinto or injecting air thereinto by using the mouth, and the safety sign balloon is hung on a trunk or another location, thereby enabling a safety sign to be noticed from a remote location. However, this safety display balloon is problematic in that a separate gas container and a separate gas injector are required to inject gas into the balloon.

### SUMMARY

The present invention has been conceived to overcome the problems of the prior art, and an object of the present invention is to provide an information notification device for a vehicle, i.e., a vehicle-mounted safety product, that enables shapes and characters or the like, adapted to indicate a direction, to be displayed in various manners by opening the trunk of a vehicle when a breakdown or accident of the vehicle has occurred, and thus the driver of the following vehicle can be rapidly and accurately notified of the emergency situation and a traffic lane to and along which the following vehicle needs to switch its lane and to travel can be indicated by a directional sign, thereby enabling the driver of the following vehicle to more safely and rapidly deal with the emergency situation.

According to an aspect of the present invention, there is provided an information notification device for a vehicle, including: a casing formed in a block shape, and configured such that an accommodation space having an open front surface is provided therein and fastening brackets are disposed along the periphery thereof; a notification plate provided in the accommodation space of the casing so that it is disposed in an opening of the casing, disposed to be unfolded from the casing to the outside, and provided with an light-emitting diode (LED) module so that the notification plate is supplied with power from a battery of a vehicle and displays shapes and characters adapted to indicate a direction in a state of being unfolded; and an input keypad configured to enter content that is to be displayed on the notification plate through the flickering of the shapes and the characters; wherein the shapes and the characters displayed on the notification plate are configured such that "arrow" shapes are displayed to point to a left or right side in order to indicate a direction and any one of "accident" and "breakdown" is displayed to flicker at periods of 0.5 seconds on one side of the arrow shapes, thereby notifying the driver of the following vehicle of the emergency situation by attracting attention from the outside.

The notification plate may be configured such that: at least two notification plate members are foldably coupled to each other by a hinge so that the notification plate members are accommodated in and unfolded from the accommodation space of the casing; and stop portions are formed in folding portions coupled by the hinge so that when the notification plate members are unfolded, the stop portions are engaged with each other and maintain the state in which the notification plate members have been unfolded.

The information notification device for a vehicle may further include: a locking part configured to lock the notification plate in order to maintain the state in which the notification plate has been folded and accommodated in the accommodation space of the casing; and an operation button configured to unlock the locking part in order to allow the notification plate to be unfolded, and the operation button may be disposed adjacent to the locking part and manually operated, or may be disposed adjacent to the driver's seat of the vehicle and automatically operated via a wireless or wired connection.

The information notification device for a vehicle may further include a wireless communication unit configured to notify the following vehicle of whether the accident has occurred in a wireless manner inside the casing; the wireless communication unit may include: a first device configured to detect the following vehicle, and to output a warning command while transferring information about the emergency situation to following vehicle via a radio broadcast; and a second device configured to receive the warning command from the first device via wireless communication and to provide a warning that the following vehicle is approaching; the first device may include: a vehicle detection module configured to detect the following vehicle, a radio transmission unit configured to transfer information about the accident via a radio broadcast, a wireless transmission unit configured to transfer the warning command to the second device, and a first control unit configured to detect the following vehicle via the vehicle detection module, to transfer the information about the accident to the following vehicle in the form of a radio broadcast via the radio transmission unit, and to transfer the warning command to the second device via the wireless transmission unit; the vehicle detection module may include: a transmission antenna configured to radiate electromagnetic waves, a reception antenna configured to receive the electromagnetic waves radiated by the transmission antenna and reflected from the following vehicle, and a detection unit configured to radiate the electromagnetic waves via the transmission antenna, and to generate detection information by performing the signal processing of the electromagnetic waves received via the reception antenna following vehicle; the second device may include: a wireless reception unit configured to receive the warning command from the first device, a warning output unit configured to provide a warning that the following vehicle is approaching, and a second control unit configured to, when receiving the warning command from the first device via wireless communication, provide a warning that the following vehicle is approaching by controlling the warning output unit; and the warning output unit may allow a sentence to be output via voice or the notification plate.

The detection information may include the distance to the following vehicle and the speed of the following vehicle.

The first control unit may transfer the information about the accident to the following vehicle by transferring the detection information to the following vehicle via the radio transmission unit.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view showing an information notification device for a vehicle according to the present invention;
FIG. 2 is a perspective view showing the back of the information notification device for a vehicle according to the present invention;
FIG. 3 is a view showing an example of the operation of unfolding a notification plate included in the information notification device for a vehicle according to the present invention;
FIG. 4 is an enlarged view showing portion "A" of FIG. 3;
FIGS. 5 and 6 are views showing examples in which shapes and characters are displayed by the information notification device for a vehicle according to the present invention; and
FIG. 7 is a block diagram of a wireless communication unit included in the information notification device for a vehicle according to the present invention.

### DETAILED DESCRIPTION

Preferred embodiments of the present invention will be described in detail below with reference to the accompanying drawings.

Prior to the following description of the preferred embodiments, it should be noted that the following specific structural and functional descriptions will be given merely to describe embodiments based on the concept of the present invention as examples, the embodiments based on the concept of the present invention may be practiced in various forms, and the present invention should not be construed as being limited to the embodiments described herein.

Furthermore, the embodiments based on the concept of the present invention may be subjected to various modifications and may have various forms, and thus specific embodiments will be illustrated in the drawings and described in detail below. However, this does not intend to limit the embodiments based on the concept of the present invention to the disclosed specific embodiments. It should be understood that the present invention includes all modifications, equivalents and substitutions that fall within the technical spirit and scope of the present invention.

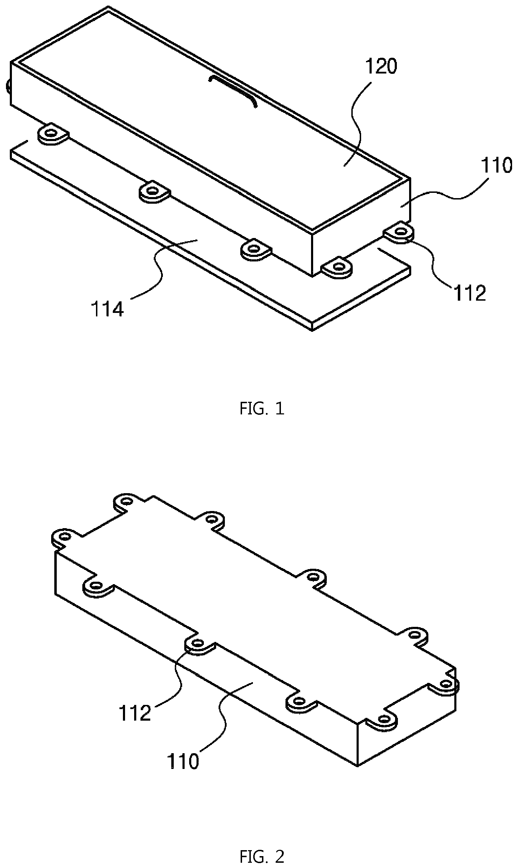

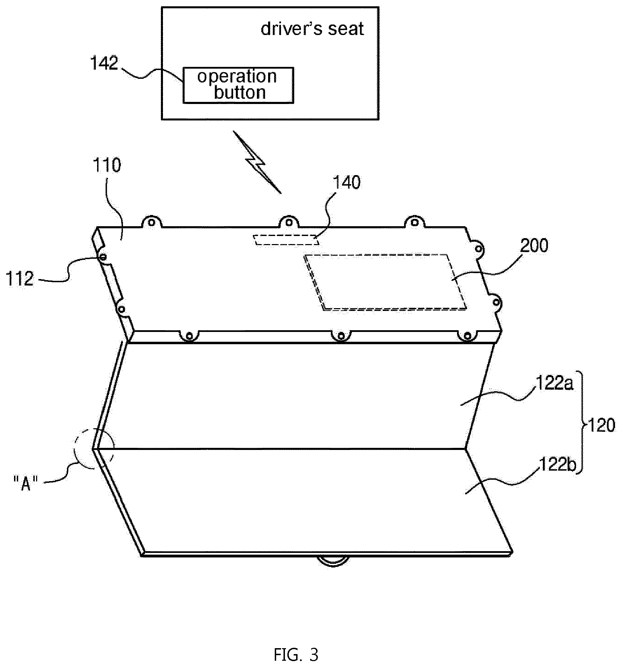

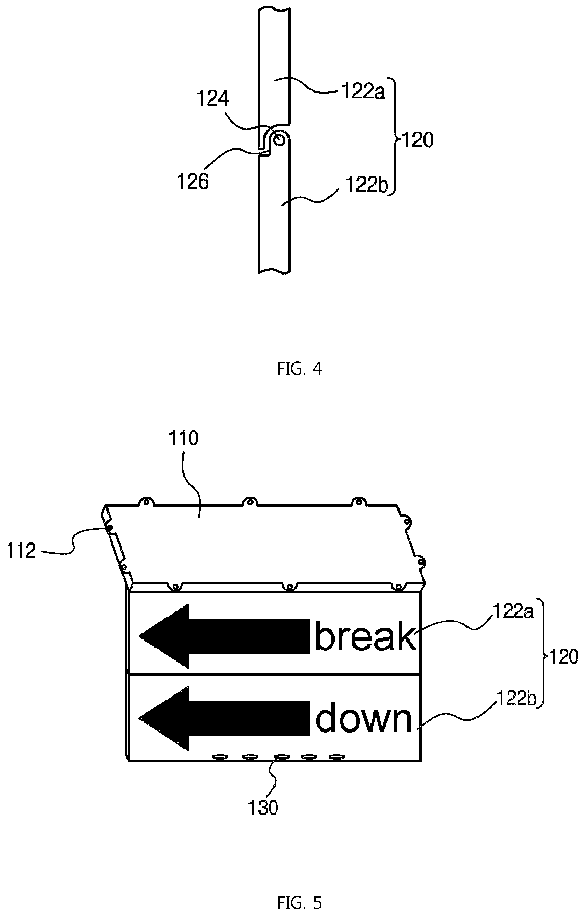

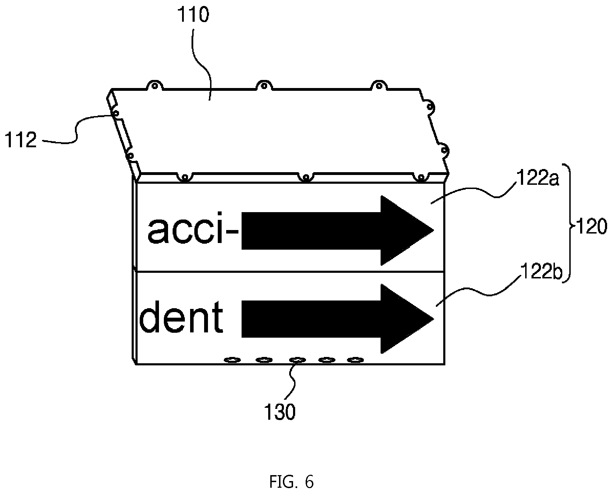

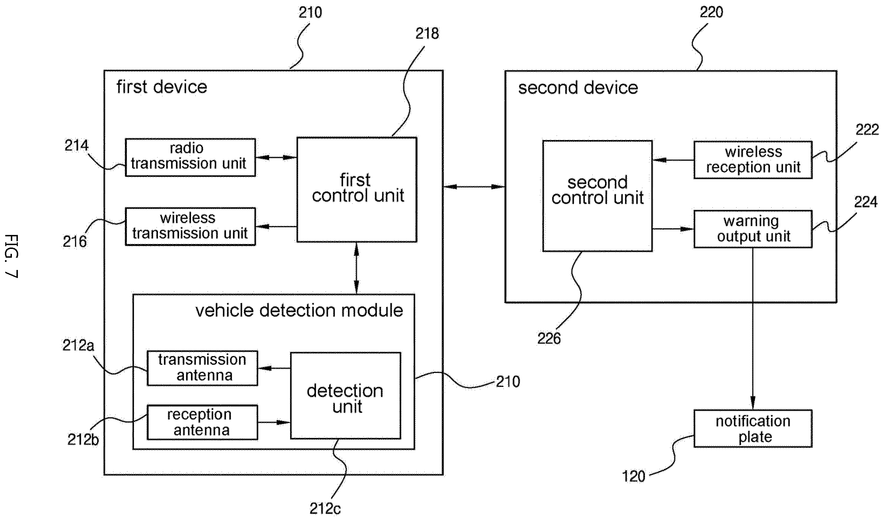

FIG. 1 is a perspective view showing an information notification device for a vehicle according to the present invention, FIG. 2 is a perspective view showing the back of the information notification device for a vehicle according to the present invention, FIG. 3 is a view showing an example of the operation of unfolding a notification plate included in the information notification device for a vehicle according to the present invention, FIG. 4 is an enlarged view showing portion "A" of FIG. 3, FIGS. 5 and 6 are views showing examples in which shapes and characters are displayed by the information notification device for a vehicle according to the present invention, and FIG. 7 is a block diagram of a wireless communication unit included in the information notification device for a vehicle according to the present invention.

As shown in these drawings, an information notification device for a vehicle according to the present invention is a safety product that is attached to and used on a vehicle. The information notification device for a vehicle according to the present invention is generally installed on the trunk rid of a vehicle or the back of a truck, and displays shapes and characters or the like adapted to indicate a direction in various manners by opening the trunk of a vehicle when a breakdown or accident of the vehicle has occurred, thereby notifying the driver of the following vehicle of the emergency situation. The information notification device for a vehicle basically includes a casing 110, a notification plate 120, and an input keypad 130.

As shown in the drawings, the casing 110 included in the information notification device for a vehicle according to the present invention is formed in a block shape, and includes an accommodation space provided with an open front surface and fastening brackets 112 disposed along the periphery of the circumferential surface of the casing 110.

In the case of a passenger car, the casing 110 may be fastened onto a trunk rid by means of the fastening brackets 112. In the case of a van or truck, the casing 110 may be fastened onto the back of the vehicle by means of the fastening brackets 112. In greater detail, fastening holes are formed through the fastening brackets 112, and thus the casing 110 can be fastened by means of fastening screws (not shown).

In this case, a buffer pad 114 is preferably disposed between the casing 110 and the trunk rid that are fastened to each other via the fastening brackets 112. The casing 110 is safely protected against an external impact, applied during the running of a vehicle in the state of being fastened onto the vehicle, by the buffer pad 114, thereby increasing the life spans of the notification plate 120, etc. installed inside the casing 110.

The buffer pad 114 may be made of vibration-proof rubber or silicon material.

As shown in the drawings, the notification plate 120 included in the information notification device for a vehicle according to the present invention is provided inside the accommodation space of the casing 110 so that the notification plate 120 can be disposed in the opening of the casing 110. The notification plate 120 is disposed such that it can be unfolded from the casing 110 to the outside.

The notification plate 120 includes a light-emitting diode (LED) module therein so that the notification plate 120 can display shapes and characters in order to indicate a direction in the state of being unfolded. In other words, notification of an emergency situation may be provided by displaying shapes and characters via the LED module in the state in which the notification plate has been unfolded. In this case, it is preferred that the shapes and characters displayed by the notification plate 120 flicker at periods of 0.5 seconds via the LED module and thus attention can be attracted from the outside. In this case, the LED module corresponds to an ordinary technology.

The shapes and the characters displayed by the notification plate 120 are displayed such that "arrow" shapes are displayed to point to a left or right side in order to indicate a direction and the characters of any one of "accident" and "breakdown" are displayed on one side of the arrow shapes. Furthermore, the shapes and the characters flicker at periods of 0.5 seconds on the notification plate via the LED module. Accordingly, attention can be attracted from the outside, thereby notifying the driver of the following vehicle of an emergency situation.

According to the present invention, a traffic lane to and along which the following vehicle needs to switch its traffic lane and to travel is indicated by the arrow shapes on the notification plate 120, thereby enabling the driver of the following vehicle to more safely and rapidly deal with the emergency situation.

Furthermore, the notification plate 120 may be configured such that at least two notification plate members 122a and 122b are foldably fastened to each other by a hinge 124, and thus the notification plate 120 can be accommodated in the accommodation space of the casing 110 and unfolded therefrom. In this case, stop portions 126 are formed in folding portions coupled by the hinge 124. When the notification plate members 122a and 122b are unfolded, the stop portions 126 are engaged with each other and maintain the state in which the notification plate members 122a and 122b have been unfolded.

When the notification plate 120 is composed of the notification plate members 122a and 122b, the shapes and the characters displayed by the notification plate 120 can be enlarged, and thus the following vehicle can be more easily notified of and deal with an emergency situation of a preceding vehicle, thereby achieving safe driving.

Furthermore, the notification plate 120 is disposed to be supplied with power from the battery of the vehicle so that the notification plate 120 can display the shapes and the characters. In this case, it is preferred that a power switch is provided on the corresponding portions of the casing 110 and the notification plate 120 so that power can be supplied at the moment at which the notification plate 120 is unfolded from the casing 110. In other words, it is preferred that when the notification plate 120 is unfolded in the state in which the notification plate 120 has been folded and accommodated in the casing 110, the power switch is operated and thus power is supplied.

As shown in the drawings, the input keypad 130 included in the information notification device for a vehicle according to the present invention enables content to be entered so that the content can be displayed on the notification plate 120 through the flickering of the shapes and the characters.

The input keypad 130 may be implemented as a typical keyboard, or may be implemented by disposing buttons on one side of the notification plate 120.

As shown in the drawings, a locking part 140 and an operation button 142 configured to unlock the locking part 140 are preferably included in the information notification device for a vehicle according to the present invention.

The locking part 140 is configured to lock the notification plate 120 in order to maintain the state in which the notification plate 120 is folded and accommodated inside the accommodation space of the casing 110. The locking part 140 may employ a configuration that is typically used for the trunk or door of a vehicle or the like.

Furthermore, the operation button 142 unlocks the locking part 140 so that the notification plate 120 can be unfolded. The operation button 142 may be disposed adjacent to the locking part 140 and manually operated, or may be disposed adjacent to the driver's seat of the vehicle and automatically operated via a wireless or wired connection.

In this case, a configuration for unlocking the locking part 140 in the state in which the operation button 142 has been located adjacent to a driver's seat corresponds to ordinary technology. In brief, this configuration may be implemented such that the locking part 140 is driven by a motor and the motor is operated by the operation of the operation button.

As shown in the drawings, a wireless communication unit 200 installed inside the casing 110 and configured to wirelessly notify the following vehicle of whether an accident has occurred is preferably included in the information notification device for a vehicle according to the present invention.

The wireless communication unit 200 preferably includes: a first device 210 configured to detect the following vehicle and to issue a warning command while transferring information about an emergency situation to the following vehicle via a radio broadcast; and a second device 220 configured to receive the warning command from the first device 210 via wireless communication and to provide a warning that the following vehicle is approaching.

When an emergency situation of the vehicle has occurred, the first device 210 detects the following vehicle, transfers notification of the occurrence of the accident to the following vehicle via a radio broadcast, and transfers a warning command to the second device 220.

The first device 210 preferably includes a vehicle detection module 212, a radio transmission unit 214, a wireless transmission unit 216, and a first control unit 218.

The vehicle detection module 212 functions to detect the following vehicle, and may be implemented as a radar sensor or the like. The vehicle detection module 212 preferably includes a transmission antenna 212a, a reception antenna 212b, and a detection unit 212c.

Furthermore, the transmission antenna 212a functions to radiate electromagnetic waves. The transmission antenna 212a is disposed on the back of the vehicle or the like, and detects the approaching following vehicle by radiating electromagnetic waves.

Meanwhile, the reception antenna 212b receives the electromagnetic waves radiated by the transmission antenna 212a and reflected from the following vehicle.

In this case, the transmission antenna 212a and the reception antenna 212b may be implemented in an integrated form inside a single module.

The detection unit 212c radiates electromagnetic waves via the transmission antenna 212a, performs the signal processing of the electromagnetic waves received via the reception antenna 212b, and acquires detection information regarding the following vehicle.

The detection information may include the presence or absence of the following vehicle, the distance to the following vehicle, the speed of the following vehicle, etc.

In this case, frequency modulation continuous wave (FMCW), pulse modulation or the like may be used as a radar modulation method.

Furthermore, the radio transmission unit 214 transfers information about an emergency situation of the vehicle via a radio broadcast. The radio transmission unit 214 transfers information about an accident over a predetermined or longer distance from the vehicle in an emergency situation by controlling the output thereof.

Meanwhile, the radio transmission unit 214 preferably transfers the information about the emergency situation of the vehicle via various frequency channels, e.g., FM 88.0 MHz, FM 88.2 MHz, etc., via which FM radio can be received.

Accordingly, the driver of the following vehicle can become aware of a forward emergency situation via a radio or the like installed in the following vehicle, and thus can perform safe driving, thereby preventing a secondary accident from occurring.

Furthermore, the wireless transmission unit 216 transfers a warning command to the second device 220 in response to a control signal of the first control unit 218.

In this case, the wireless transmission unit 216 may transfer the warning command to the second device 220 over various communication networks. In this case, these communication networks include Bluetooth, WiFi, 3G, and LTE networks, etc.

Furthermore, the first control unit 218 detects the following vehicle via the vehicle detection module 212, transfers information about the occurrence of the accident to the following vehicle in the form of a radio broadcast via the radio transmission unit 214, and transfers a warning command to the second device 220 via the wireless transmission unit 216.

In this case, when the following vehicle is detected via the vehicle detection module 212, the first control unit 218 transfers information about the occurrence of the accident to the following vehicle via the radio transmission unit 214 according to the detection information.

Furthermore, the second device 220 preferably includes a wireless reception unit 222, a warning output unit 224, and a second control unit 226.

The wireless reception unit 222 may receive the warning command from the wireless transmission unit 216 of the first device 210.

The warning output unit 224 warns the driver of the vehicle in the emergency situation that the following vehicle is approaching. In other words, a voice providing a warning that the following vehicle is approaching may be made to be output by the warning output unit 224.

In this case, the voice providing a warning that the following vehicle is approaching may include the detection information included in the warning command.

Furthermore, the warning that the following vehicle is approaching may be displayed via the notification plate 120. In other words, when shapes and characters are displayed on the notification plate 120, characters providing the warning that the following vehicle is approaching may be alternately displayed, or the notification plate 120 may be segmented, arrows and characters providing the guidance of the following vehicle may be displayed in one section, and a warning sentence may be displayed in another section.

Accordingly, the driver of the accident vehicle may become aware of the speed of the following vehicle, the distance to the following vehicle, etc., or may receive the warning that the following vehicle is approaching via voice.

The second control unit 228 receives the warning command via the wireless reception unit 222, and warns the driver of the accident vehicle that the vehicle is approaching by controlling the warning output unit 224 according to the warning command.

In this case, the second control unit 226 may output information about the distance to the following vehicle, the speed of the following vehicle, etc., or may provide notification of the distance to the following vehicle, the speed of the following vehicle, etc. via voice.

The operations of the wireless communication unit 200 are now described. The first control unit 218 of the first device 210 detects the following vehicle by controlling the vehicle detection module 212. In other words, the transmission antenna 212a of the vehicle detection module 212 radiates electromagnetic waves, and the reception antenna 212b receives electromagnetic waves radiated by the transmission antenna 212a and reflected from the following vehicle. In this case, the detection unit 212c generates detection information regarding the following vehicle by performing the signal processing of the electromagnetic waves received via the reception antenna 212b.

In this case, the detection information may include the presence or absence of the following vehicle, the distance to the following vehicle, and the speed of the following vehicle.

Thereafter, the first control unit 218 of the first device 210 broadcasts the occurrence of an accident to the following vehicle over a broadcast frequency channel by controlling the radio transmission unit 214. In this case, radio transmission unit 214 may transfer information about the occurrence of the accident over a predetermined or longer distance from the accident vehicle by controlling its output, and FM 88.0 MHz, FM 88.2 MHz, etc. may be used as a broadcast frequency channel.

In this case, the distance to the accident vehicle, the speed of the following vehicle, etc. may be output via the radio receiver of the following vehicle, or the notification plate 120, via which characters, an image or a voice providing a warning that an accident vehicle is present forward are output, may be viewed with the naked eye.

Accordingly, the driver of the following vehicle may become aware of a forward vehicle accident via a radio receiver or the like installed in the following vehicle, and thus an accident vehicle and the driver of the accident vehicle can be avoided, thereby preventing a secondary accident from occurring.

Thereafter, the first control unit 218 of the first device 210 transfers a warning command to the second device 220 of the wireless reception unit 222 by controlling the wireless transmission unit 216.

Accordingly, the wireless reception unit 222 of the second device 220 receives the warning command from the wireless transmission unit 216 of the first device 210, and the second control unit 226 of the second device 220 warns the driver of the accident vehicle that the following vehicle is approaching via the warning output unit 224 according to the corresponding warning command.

According to the present invention, when a breakdown or accident of a vehicle has occurred, notification of the emergency situation can be provided and a traffic lane to and along which the following vehicle needs to switch its lane and to travel can be indicated via a directional sign by opening the trunk of the vehicle and displaying shapes and characters or the like adapted to indicate a direction in various manners, and the driver of the following vehicle can be notified of the emergency situation via a radio broadcast through wireless communication, thereby enabling the driver of the following vehicle to more safely and rapidly deal with the emergency situation and to perform safe driving.

The object of the present invention is achieved by the above-described configuration of the present invention. While the present invention has been described in conjunction with the limited embodiments and drawings, the present invention is not limited thereto. Accordingly, it will be apparent to those having ordinary knowledge in the art to which the present invention pertains that various modifications and alterations can be made without departing from the technical spirit of the present invention defined by the attached claims and a range equivalent to the attached claims.

## Claims

1. An information notification device for a vehicle, comprising:
a casing formed in a block shape, and configured such that an accommodation space having an open front surface is provided therein and fastening brackets are disposed along a periphery thereof;
a notification plate provided in the accommodation space of the casing so that it is disposed in an opening of the casing, disposed to be unfolded from the casing to an outside, and provided with an light-emitting diode (LED) module so that the notification plate is supplied with power from a battery of a vehicle and displays shapes and characters adapted to indicate a direction in a state of being unfolded; and
an input keypad configured to enter content that is to be displayed on the notification plate through flickering of the shapes and the characters;
wherein the shapes and the characters displayed on the notification plate are configured such that:
"arrow" shapes are displayed to point to a left or right side in order to indicate a direction and any one of "accident" and "breakdown" is displayed on one side of the arrow shapes to flicker at periods of 0.5 seconds, thereby notifying a driver of a following vehicle of the emergency situation by attracting attention from the outside; and
wherein the notification plate is configured such that:
at least two notification plate members are foldably coupled to each other by a hinge so that the notification plate members are accommodated in and unfolded from the accommodation space of the casing; and
stop portions are formed in folding portions coupled by the hinge so that when the notification plate members are unfolded, the stop portions are engaged with each other and maintain a state in which the notification plate members have been unfolded.

2. The information notification device for a vehicle of claim 1, further comprising:
a locking part configured to lock the notification plate in order to maintain a state in which the notification plate has been folded and accommodated in the accommodation space of the casing; and
an operation button configured to unlock the locking part in order to allow the notification plate to be unfolded;
wherein the operation button is disposed adjacent to the locking part and manually operated, or is disposed adjacent to a driver's seat of the vehicle and automatically operated via a wireless or wired connection.

3. The information notification device for a vehicle of claim 1, further comprising a wireless communication unit configured to notify the following vehicle of whether the accident has occurred in a wireless manner inside the casing;
wherein the wireless communication unit comprises:
a first device configured to detect the following vehicle, and to output a warning command while transferring information about the emergency situation to following vehicle via a radio broadcast; and
a second device configured to receive the warning command from the first device via wireless communication and to provide a warning that the following vehicle is approaching;
wherein the first device comprises:
a vehicle detection module configured to detect the following vehicle, a radio transmission unit configured to transfer information about the accident via a radio broadcast, a wireless transmission unit configured to transfer the warning command to the second device, and a first control unit configured to detect the following vehicle via the vehicle detection module, to transfer the information about the accident to the following vehicle in a form of a radio broadcast via the radio transmission unit, and to transfer the warning command to the second device via the wireless transmission unit;
wherein the vehicle detection module comprises:
a transmission antenna configured to radiate electromagnetic waves, a reception antenna configured to receive the electromagnetic waves radiated by the transmission antenna and reflected from the following vehicle, and a detection unit configured to radiate the electromagnetic waves via the transmission antenna, and to generate detection information by performing signal processing of the electromagnetic waves received via the reception antenna following vehicle;
the second device comprises:
a wireless reception unit configured to receive the warning command from the first device, a warning output unit configured to provide a warning that the following vehicle is approaching, and a second control unit configured to, when receiving the warning command from the first device via wireless communication, provide a warning that the following vehicle is approaching by controlling the warning output unit; and
the warning output unit allows a sentence to be output via voice or the notification plate.

4. The information notification device for a vehicle of claim 3, wherein the detection information comprises a distance to the following vehicle and a speed of the following vehicle.

5. The information notification device for a vehicle of claim 3, wherein the first control unit transfers the information about the accident to the following vehicle by transferring the detection information to the following vehicle via the radio transmission unit.
